# EUROPÄISCHE PATENTSCHRIFT

(11) **EP 1 005 216 B1**
(45) Veröffentlichungstag und Bekanntmachung des Hinweises auf die Patenterteilung: **19.11.2008**
(21) Anmeldenummer: 99440323.6
(22) Anmeldetag: 19.11.1999
(51) Int. Cl.: H04M 3/22, H04Q 3/00, H04M 3/42

(54) **Verfahren und Vorrichtung zur Validierung von Konfigurationsdaten für Telekommunikationssysteme**
Method and system for the validation of configuration data for telecommunications systems
Procédé et système pour validation des données de configuration pour systèmes de télécommunication

(30) Priorität: 27.11.1998 DE 19854753
(43) Veröffentlichungstag der Anmeldung: 31.05.2000
(73) Patentinhaber: Alcatel Lucent, 75008 Paris (FR)
(72) Erfinder: Hemzal, Georg, 12439 Berlin (DE)
(74) Vertreter: Brose, Gerhard

(56) Entgegenhaltungen:
- EP-A- 0 667 722
- WO-A-97/43848
- US-A- 5 713 075

## Beschreibung

Die vorliegende Erfindung betrifft ein Verfahren zur Validierung von Konfigurationsdaten als Betriebsparameter von Telekommunikationssystemen, sowie ein Validierungsmodul gemäß dem Oberbegriff des Anspruchs 7 hierfür, einen Server gemäß dem Oberbegriff des Anspruchs 8 hierfür, ein Steuermodul und ein Speichermittel hierfür.

Ein solches Verfahren ist bekannt aus dem US-Patent 5,713,075.

Telekommunikationssysteme, z.B. Vermittlungsstellen, Zugangssysteme, Cross-Connects, Netzwerk Management Systeme, Rechnernetzwerke etc., werden im allgemeinen durch in gewissen Grenzen wählbare Konfigurationsdaten an spezielle Erfordernisse angepaßt, die durch den jeweiligen Einsatzbereich bestimmt werden. Gemäß der Vorgaben solcher Konfigurationsdaten kann eine in einem Telekommunikationssystem enthaltene Steuerungssoftware das Telekommunikationssystem in dem jeweiligen Einsatzbereich bestimmungsgemäß steuern. Einer modernen digitalen Vermittlungsstelle muß z.B. durch entsprechende Konfigurationsdaten unter anderem vorgegeben werden, welche Teilnehmeranschlüsse die Vermittlungsstelle zu bedienen hat, welche Rufnummern diesen jeweils zugeordnet sind und welche Telekommunikationsdienste den jeweiligen Teilnehmeranschlüssen zur Verfügung gestellt werden. Die Konfigurationsdaten eines solchen Teilnehmeranschlusses müssen dabei vorgegebenen Regeln genügen. So darf z.B. eine Rufnummer eines Teilnehmeranschlusses nur Zahlzeichen und keine Buchstabenzeichen enthalten und muß aus einer vorgegebenen Anzahl von Zahlzeichen bestehen. Ferner ist es meist nur dann möglich, einen Telekommunikationsdienst einem Teilnehmeranschluß zuzuweisen, wenn dessen Rufnummer zu einer für den jeweiligen Telekommunikationsdienst vorgesehenen Rufnummerngruppe gehört. Beispielsweise können für ein ISDN-Telekommunikationsnetz (Integrated Services Digital Network) definierte Dienste in vollem Umfang nur für einen ISDN-fähigen Teilnehmeranschluß eingerichtet werden. Bereits für einen einzelnen Teilnehmeranschlusses sind also die bei der Erstellung von dessen Konfigurationsdaten einzuhaltenden Bedingungen schon sehr umfangreich und kompliziert. Da jedoch zwischen einzelnen Teilnehmeranschlüssen einer Vermittlungsstelle in Bezug auf Konfigurationsdaten wechselseitige Beziehungen bestehen, z.B. weil mehrere Teilnehmeranschlüsse an eine gemeinsame Anschlußbaugruppe angeschlossen werden, müssen auch die durch die wechselseitigen Beziehungen erforderlichen Bedingungen bei der Erstellung der Konfigurationsdaten eingehalten werden. Da eine Steuerungssoftware eines Telekommunikationssystemes nur dann korrekt arbeiten kann, wenn die ihr als Betriebsparameter vorgegebenen Konfigurationsdaten richtig und in sich konsistent sind, müssen die Konfigurationsdaten vor deren Eingabe in das Telekommunikationssystem geprüft werden. Ein solcher Vorgang wird als Validierung bezeichnet.

Konfigurationsdaten könnten zwar durch das zu konfigurierende Telekommunikationssystem selbst geprüft werden. Da jedoch, wie im obigen Beispiel bereits angedeutet, Konfigurationsdaten für ein Telekommunikationssystem meist sehr umfangreich sind und komplizierten Bedingungen genügen müssen, wäre dann in dem Telekommunikationssystem eine umfangreiche "Prüfsoftware" erforderlich, welche in dem Telekommunikationssystem für andere Zwecke dringender gebrauchte Ressourcen benötigen würde, z.B. Speicherplatz. Deshalb werden solche Konfigurationsdaten mit Hilfe eines Konfigurationssystemes erstellt, das jeweils für Konfigurationsdaten eines Telekommunikationssystem oder eines Typs eines solchen Telekommunikationssystemes geeignet ist. Ein typisches Beispiel für ein solches Konfigurationssystem ist in der Europäischen Patentanmeldung EP 0 678 817 A1 dargestellt. Dort werden von einem Computer mit Hilfe einer graphischen Bedienoberfläche Konfigurationsdaten erfaßt und nach der Eingabe mit Hilfe eines Programmodules einer Überprüfung ihrer Konsistenz, also einer Validierung unterzogen. Erst dann werden die Konfigurationsdaten in eine Datenbank geschrieben und anschließend in einen Zustand weiterverarbeitet, in dem sie in ein "Zielsystem" genanntes Telekommunikationssystem geladen werden können. Sowohl die graphische Bedienoberfläche als auch das Programmodul zur Validierung der Konfigurationsdaten und die in dem Validierungs-Programmodul enthaltenen Validierungsregeln sind - wie allgemein üblich - speziell für die zu erfassenden Konfigurationsdaten vorgesehen und programmiert, im vorliegenden Beispiel in der Programmiersprache "Omnis 7". Eine solcherart "fest" programmierte graphische Bedienoberfläche sowie ein ebenfalls "fest" programmiertes zugehöriges Validierungs-Programmodules sind nur jeweils für die Erstellung von Konfigurationsdaten für ein bestimmtes Ziel-Telekommunikationssystem optimiert und geeignet, so daß für jedes Ziel-Telekommunikationssystem oder jeden Typ eines solchen Systems jeweils ein speziell für das jeweilige Ziel-Telekommunikationssystem geeignetes Konfigurationssystem erstellt und eingesetzt werden muß.

Sofern sich die Bedingungen ändern, denen Konfigurationsdaten genügen müssen, z.B. weil eine neue Steuersoftware eines Telekommunikationssystemes Konfigurationsdaten in anderer Form oder in anderem Umfang verlangt oder weil in Konfigurationsdaten zusätzlich neue Datentypen zur Konfiguration neuer Leistungsmerkmale enthalten sind, muß auch ein für die neuen Konfigurationsdaten geeignetes neues Validierungsprogrammodul erstellt werden oder ein bestehendes Validierungsprogrammodul zumindest teilweise neu programmiert und anschließend compiliert werden. Ein neues Validierungsprogrammodul zu erstellen ist jedoch einerseits zeitraubend und nur mit Hilfe von Programmierwerkzeugen möglich. Andrerseits unterlaufen bei einer solchen Neuprogrammierung leicht Fehler, die durch umfangreiches Testen des neuen oder des modifizierten Validierungsprogrammoduls ermittelt und anschließend behoben werden müssen.

Aufgabe der Erfindung ist es, Konfigurationsdaten eines Telekommunikationssystemes auf effiziente Weise nach für das jeweils mit den Konfigurationsdaten arbeitende Telekommunikationssystem erforderlichen Validierungsregeln zu validieren.

Diese Aufgabe wird durch ein Verfahren zur Validierung von Konfigurationsdaten für Telekommunikationssysteme gemäß der technischen Lehre des Anspruchs 1, sowie ein Validierungsmodul gemäß der technischen Lehre des Anspruchs 7, einen Server gemäß der technischen Lehre des Anspruchs 8, ein Steuermodul gemäß der technischen Lehre des Anspruchs 9 und ein Speichermittel gemäß der technischen Lehre des Anspruchs 10 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, ein Validierungsmodul, ein auf einem Computer ausführbares Programmodul, so zu gestalten, daß das Validierungsmodul Validierungsregeln, die jeweils für die Validierung von Konfigurationsdaten eines Telekommunikationssystem erforderlich sind und in einem Validierungsregelsatz abgelegt sind, vor der eigentlichen Validierung der Konfigurationsdaten ermittelt. Einen so ermittelten Validierungsregelsatz liest das Validierungsmodul dann aus einem Speicher aus und prüft die Konfigurationsdaten nach den in dem Validierungsregelsatz enthaltenen Validierungsregeln. Die Validierungsregeln sind erfindungsgemäß also nicht in dem eigentlichen Validierungsmodul enthalten, sondern werden abhängig von den zu prüfenden Konfigurationsdaten jeweils neu eingelesen und durch das Validierungsmodul ausgewertet.

In einer Ausgestaltung der Erfindung liest das Validierungsmodul Steuerdaten ein, in denen der zu den Konfigurationsdaten gehörige Validierungsregelsatz definiert ist. In einer weiteren Ausgestaltung der Erfindung ermittelt das Validierungsmodul anhand eines Kennzeichners, der in den zu prüfenden Konfigurationsdaten enthalten ist, welcher Validierungsregelsatz zur Prüfung der Konfigurationsdaten heranzuziehen ist. In einer Variante der Erfindung sind die Validierungsregeln eines Validierungsregelsatzes in einer sogenannten Interpretersprache verfaßt und werden bei der Prüfung der Konfigurationsdaten von dem Validierungsmodul interpretiert. Es ist jedoch auch möglich, daß die Validierungsregeln bereits in einer von einem Prozessor ausführbaren Sprache verfaßt sind und als sogenannte Funktionen von dem Validierungsmodul in den Prüfungsprozess direkt eingebunden werden.

Im folgenden werden die Erfindung und ihre Vorteile anhand eines Ausführungsbeispiels unter Zuhilfenahme der Zeichnungen dargestellt.
- Figur 1: zeigt ein sehr schematisches Beispiel einer Anordnung zur Ausführung des erfindungsgemäßen Verfahrens mit einem erfindungsgemäßen Validierungsmodul (VM), Validierungsregelsätzen (VR1, VR2), zu validierenden Konfigurationsdaten (KD) und einer Meldung (MSG).
- Figur 2: zeigt eine weitere schematische Anordnung zur Ausführung des erfindungsgemäßen Verfahrens mit Konfigurationsdaten in zwei Teilmengen (TAB1, TAB2) und drei unterschiedlichen Validierungsregeln (VRA1, VRA2 und VRB).
- Figur 3: zeigt ein Ablaufdiagramm eines erfindungsgemäßen Validierungsmodules (VM).
- Figur 4: zeigt einen erfindungsgemäßen Server (SER) zur Ausführung des erfindungsgemäßen Verfahrens.

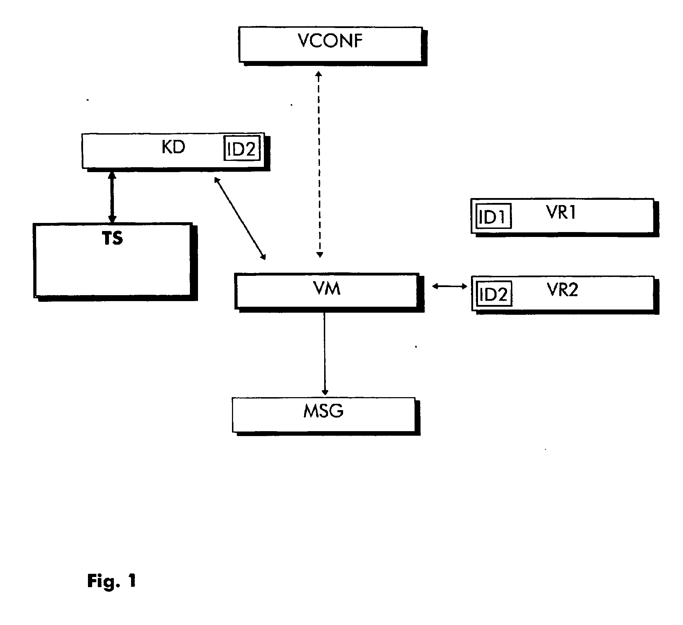

Figur 1 zeigt ein sehr schematisches Beispiel einer Anordnung zur Ausführung des erfindungsgemäßen Verfahrens. Dort ist ein erfindungsgemäßes Validierungsmodul VM dargestellt, das als ein Programmodul auf einem Computer, z.B. einem Personal Computer oder einer Workstation, ausführbar ist und Konfigurationsdaten, beispielhaft dargestellt durch Konfigurationsdaten KD, universell für verschiedenartige Telekommunikationssysteme validieren kann. Ein Beispiel für ein Telekommunikationssystem ist in Form eines Zielsystemes TS in Figur 1 gezeigt. Das Zielsystem TS kann mit Konfigurationsdaten KD konfiguriert werden. Das Zielsystem TS kann z.B. eine Vermittlungsstelle oder ein Netzwerk-Management-System sein. Die Konfigurationsdaten KD enthalten z.B. Daten über Verbindungen, die von dem Zielsystem TS geschaltet werden können oder Daten, die von dem Zielsystem TS bediente Teilnehmeranschlüsse definieren. Das Zielsystem TS kann jedoch auch z.B. eine Fernwirk-Unterstation sein. Die Konfigurationsdaten KD enthalten dann z.B. Daten über Messwerte und Befehle, die die Fernwirk-Unterstation erfassen bzw. ausgeben soll.

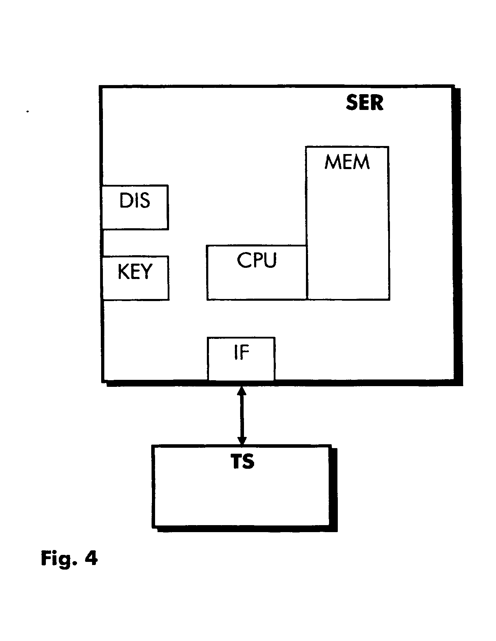

Ein Computer zur Ausführung des Validierungsmodules VM ist in einigen wesentlichen Komponenten ist in Figur 4 als Server SER dargestellt. Der Server SER enthält ein Steuermittel CPU, z.B. einen Prozessor, zur Ausführung maschinenlesbarer Befehle, z.B. zur Ausführung des Validierungsmodules VM.

Ferner weist der Server SER einen Speicher MEM auf, in dem das Validierungsmodul VM gespeichert sein kann. Außerdem verfügt der Server SER als Eingabemittel und Ausgabemittel über ein Tastenfeld KEY und über eine Anzeigevorrichtung DIS, z.B. um Daten auszugeben, die von dem Validierungsmodul VM erzeugt werden, oder um Daten an das Validierungsmodul VM zu senden. Ferner verfügt der Server SER über eine Schnittstellenvorrichtung IF, über die er Daten mit dem aus Figur 1 bekannten Zielsystem TS austauschen kann. Die Komponenten des Servers SER sind durch in Figur 4 nicht dargestellte Verbindungen miteinander verbunden. Ein Betriebssystem, z.B. UNIX oder DOS (Disc Operating System), verwaltet die Betriebsmittel des Servers SER und steuert unter anderem die Ausführung des Validierungsmodules VM. Zur weiteren Darstellung der Erfindung wird wieder die Figur 1 betrachtet, wobei auch auf Komponenten des in Figur 4 dargestellten Servers SER verwiesen wird.

Das Validierungsmodul VM kann die Konfigurationsdaten KD nach einer oder mehreren Validierungsregeln validieren, die in einem Validierungsregelsatz enthalten sind. Beispiele für solche Validierungsregelsätze sind in Form eines Validierungsregelsatzes VR1 und eines Validierungsregelsatzes VR2 in Figur 1 gezeigt. Die Validierungsregelsätze VR1 und VR2 stehen beispielhaft für weitere, in Figur 1 nicht dargestellte Validierungsregelsätze und sind in dem Speicher MEM abgelegt. Die Konfigurationsdaten KD werden von dem Zielsystem TS an das Validierungsmodul VM gesendet oder von einem in Figur 1 nicht gezeigten Programmodul erfaßt, z.B. von einem Editor oder einer graphischen Bedienoberfläche oder über die Schnittstellenvorrichtung IF eingelesen. Anschließend werden die Konfigurationsdaten KD dem Validierungsmodul VM übermittelt, z.B. in Form einer Datei, die in dem Speicher MEM abgelegt ist, oder mit Hilfe von Nachrichten, die an das Validierungsmodul VM gesendet werden. Der Vorgang des Übermittelns ist in Figur 1 durch einen Pfeil angedeutet.

Nachdem das Validierungsmodul VM die Konfigurationsdaten KD erfaßt hat, ermittelt das Validierungsmodul VM, nach welchen Validierungsregeln die Konfigurationsdaten KD zu prüfen sind. Dazu verwendet das Validierungsmodul VM Steuerdaten VCONF, in denen angegeben ist, in welchem Validierungsregelsatz die erforderlichen Validierungsregeln enthalten sind. Die Steuerdaten können z.B. in Form einer Steuertabelle abgelegt sein, in der jeweils eine Zuordnung von Konfigurationsdaten zu einem Validierungsregelsatz definiert ist. Dort kann z.B. festgelegt sein, daß ein bestimmter Typ eines Zielsystemes Konfigurationsdaten benötigt, die anhand des Validierungsregelsatzes VR1 zu prüfen sind, ein anderer Typ eines Zielsystemes jedoch Konfigurationsdaten, die dem Validierungsregelsatz VR2 standhalten müssen. In dem Beispiel aus Figur 1 ist in den Steuerdaten VCONF festgelegt, daß die Konfigurationsdaten KD nach den Vorgaben des Validierungsregelsatzes VR2 zu prüfen sind. Das Validierungsmodul VM liest den Validierungsregelsatz VR2 aus dem Speicher MEM ein und prüft die Konfigurationsdaten KD nach den Vorgaben des Validierungsregelsatzes VR2. Das Ergebnis der Prüfung meldet das Validierungsmodul VM mit einer Meldenachricht MSG, z.B. in Form einer Ausgabe an der Anzeigevorrichtung DIS oder auf einem Drucker. Mit Hilfe der Meldenachricht MSG können bei der Prüfung aufgetretene Fehler auch detailliert angezeigt werden. Wenn die von dem Validierungsmodul VM überprüften Konfigurationsdaten KD der Überprüfung standgehalten haben, also konsistent sind, können die Konfigurationsdaten KD z.B. über die Schnittstellenvorrichtung IF in das Zielsystem TS geladen und von diesem als Betriebsparameter übernommen werden.

Wenn sich die Erfordernisse geändert haben, welche die Konfigurationsdaten KD für einen korrekten Betrieb des Zielsystemes TS erfüllen müssen, genügt es, lediglich den Validierungsregelsatz VR2 auszutauschen oder so zu modifizieren, daß die in dem neuen oder modifizierten Validierungsregelsatz VR2 enthaltenen Validierungsregeln eine vollständige, an die neuen Erfordernisse des Zielsystemes TS angepaßte Validierung sicherstellen. Das Validierungsmodul VM an sich muß nicht geändert werden. Auf diese Weise ist es auch leicht möglich, weitere Validierungsregeln in einen Validierungsregelsatz einzufügen oder nicht mehr benötigte Validierungsregeln aus einem Validierungsregelsatz zu entfernen. Soll das Validierungsmodul VM Konfigurationsdaten validieren, die weder mit dem Validierungsregelsatz VR1 noch mit dem Validierungsregelsatz VR2 validierbar sind, kann auch jederzeit ein neuer Validierungsregelsatz zu den Validierungsregelsätzen VR1 und VR2 hinzugefügt werden, mit dem die neuen Konfigurationsdaten validiert werden können.

Wenn in den Validierungsregelsätzen VR1 oder VR2 Vorgabeinformationen, z.B. Textelemente, für einen Inhalt der Meldenachricht MSG enthalten, kann das Validierungsmodul VM diese Vorgabeinformationen zur Gestaltung der Meldenachricht MSG verwenden. So kann z.B. in den Validierungsregelsätzen VR1 oder VR2 für jede der dort enthaltenen Validierungsregeln festgelegt sein, welche Fehlermeldung von dem Validierungsmodul VM anzuzeigen ist, wenn bei einer Prüfung nach den Vorgaben der jeweiligen Validierungsregel ein Fehler auftritt. Weil die Vorgabeinformationen für die Meldenachricht MSG nicht Bestandteil des Validierungsmodules VM sind, sondern jeweils aus einem Validierungsregelsatz ausgelesen werden, können diese Vorgabeinformationen genauso wie die Validierungsregeln leicht ausgetauscht oder modifiziert werden, um so aktuellen Erfordernissen gerecht zu werden. Damit kann z.B. ein neu in einen Validierungsregelsatz eingefügter Text für eine Fehlermeldung eine Ursache für einen Fehler näher präzisieren.

Mit Hilfe der Steuerdaten VCONF kann dem Validierungsmodul VM auch schon vor dem Einlesen der Konfigurationsdaten KD ermitteln, mit welchem der Validierungsregelsätze VR1 oder VR2 die Konfigurationsdaten KD zu prüfen sind, z.B. wenn die Steuerdaten VCONF als sogenannte Aufrufparameter dem Validierungsmodul VM schon bei dessen Start mitgegeben werden.

Es ist jedoch auch zusätzlich oder alternativ zu der Ermittlung eines Validierungsregelsatzes anhand von Steuerdaten möglich, daß das Validierungsmodul VM anhand der Konfigurationsdaten KD ermittelt, welcher der Validierungsregelsätze VR1 oder VR2 zur Prüfung der Konfigurationsdaten KD benötigt wird. Dazu sucht das Validierungsmodul VM in den Konfigurationsdaten KD nach einem Merkmal oder einem Identifizierer, der die Konfigurationsdaten KD eindeutig kennzeichnet. Ein solcher Identifizierer ist in Form eines Identifizierers ID2 in den Konfigurationsdaten KD enthalten. Der Identifizierer ID2 kann die Konfigurationsdaten KD z.B. als zu einem bestimmten Zielsystem, in Figur 1 der Zielsystem TS, zugehörig ausweisen und ein Textelement mit dem Inhalt sein: "Vermittlungsstelle A mit Steuersoftware Version 1.3". Anhand von beispielsweise in einer Zuordnungstabelle enthaltenen Zuordnungen von jeweils einem solchen Identifizierer zu einem der Validierungsregelsätze kann dann das Validierungsmodul VM feststellen, welcher Validierungsregelsatz zur Prüfung der Konfigurationsdaten KD zu verwenden ist. Es ist auch möglich, daß das Validierungsmodul VM den zur Validierung der Konfigurationsdaten KD erforderlichen Validierungsregelsatz VR1 oder VR2 anhand eines Identifizierers ermittelt, der gleich lauten muß wie derjenige, der in den Konfigurationsdaten KD enthalten ist. Der Identifizierer ID2 der Konfigurationsdaten KD ist in dem Beispiel aus Figur 1 auch in dem Validierungsregelsatz VR2 angegeben; der Validierungsregelsatz VR1 dagegen weist einen Identifizierer ID1 auf.

Wenn kein Identifizierer in den Konfigurationsdaten KD enthalten ist, z.B. weil ein solcher Identifizierer das Zielsystem TS bei der Verarbeitung der Konfigurationsdaten KD stören würde, kann das Validierungsmodul VM auch anhand der Struktur und der Art der Konfigurationsdaten KD ermitteln, welcher Validierungsregelsatz zur Prüfung verwendet muß. Wenn - in einem sehr einfachen Beispiel - die Konfigurationsdaten KD nur Datensätze enthalten, die jeweils mit einer Zahlenkette beginnen, kann das Validierungsmodul VM z.B. daraus ableiten, daß die Konfigurationsdaten KD nach dem Validierungsregelsatz VR1 zu prüfen sind. Wenn die Konfigurationsdaten KD jedoch nur Datensätze enthalten, die jeweils mit einer Buchstabenkette beginnen, kann das Validierungsmodul VM daran erkennen, daß die Konfigurationsdaten KD nach dem Validierungsregelsatz VR2 zu prüfen sind.

Die in den Validierungsregelsätzen VR1 und VR2 enthaltenen Validierungsregeln müssen durch die Gestaltung des Validierungsmodules VM vorgegebenen semantischen und syntaktischen Regeln entsprechen. Zur Erfüllung solcher Regeln können die Validierungsregeln in einer sogenannten Interpretersprache verfaßt sein, deren Anweisungen das Validierungsmodul VM "interpretieren", also auswerten und in maschinenlesbare Befehle umsetzen kann. Diese Befehle kann dann das Steuermittel CPU in ähnlicher Weise ausführen wie die Befehlssequenzen des Validierungsmodules VM. Eine Interpretersprache für Validierungsregeln kann für das Validierungsmodul VM eigens definiert werden. Es ist jedoch auch möglich, eine universell für verschiedene Zwecke geeignete Interpretersprache einzusetzen. Ein Beispiel für eine universelle Interpretersprache ist die Sprache PERL (Practical Extraction and Report Language), die im Zusammenhang mit dem Betriebssystem UNIX gebräuchlich ist. Wenn die Validierungsregeln in PERL verfaßt sind, muß das Validierungsmodul VM die Validierungsregeln nicht unbedingt selbst interpretieren, sondern kann ein "PERL-Interpreter" genanntes Programmodul mit der Interpretation der Validierungsregeln beauftragen. Ein PERL-Interpreter gehört üblicherweise zum Lieferumfang eines UNIX Betriebssystemes. Die von dem PERL-Interpreter aus den Validierungsregeln erzeugten maschinenlesbaren Befehle werden von dem Validierungsmodul VM in dessen eigene Befehlssequenzen eingebunden, z.B. in Form von Programmverzweigungen.

Besonders einfach ist dieser Prozeß des Einbindens von Validierungsregeln in das Validierungsmodul VM dann, wenn sowohl das Validierungsmodul VM als auch die einzubindenden Validierungsregeln in derselben Interpretersprache verfaßt sind. Dann kann in dem Validierungsmodul VM ein allgemeiner Aufruf enthalten sein, der auf eine Validierungsregel verweist, die einen in dem Aufruf angegebenen Namen trägt. Der Aufruf verweist jedoch, je nachdem welcher der Validierungsregelsätze VR1 oder VR2 zu der Validierung verwendet werden muß, entweder auf eine Validierungsregel in dem Validierungsregelsatz VR1 oder auf eine Validierungsregel in dem Validierungsregelsatz VR2. Beide Validierungsregeln tragen zwar den gleichen Namen, können aber unterschiedliche Prüfvorschriften enthalten. Für eine korrekte Verzweigung der Befehlssequenzen des Validierungsmodules VM in die durch Interpretieren der Validierungsregeln erzeugten Befehlssequenzen sorgt in diesem Fall das Interpreter-Programmodul.

Die Validierungsregeln können in den Validierungsregelsätze VR1 und VR2 auch bereits in einer von einem Prozessor ausführbaren Form, als sogenannte Funktionen, auch Bibliotheksfunktionen genannt, enthalten sein. Das Validierungsmodul VM kann die Befehlssequenzen solcher Funktionen ohne vorherige Interpretation direkt in seine eigenen Befehlssequenzen einbinden. Ein solcher Vorgang wird auch als "dynamisches Linken" von Funktionen bezeichnet. In einer weiteren Variante der Erfindung können solche Funktionen auch erst zur Laufzeit des Validierungsmodules VM erzeugt werden, indem das Validierungsmodul VM einen zur Validierung der Konfigurationsdaten KD zu verwendenden Validierungsregelsatz zunächst in von einem Prozessor ausführbare Befehlssequenzen übersetzt oder durch ein Übersetzer-Programmodul übersetzen läßt und die so erzeugten Validierungsregel-Befehlssequenzen in seine eigenen Befehlssequenzen einbindet.

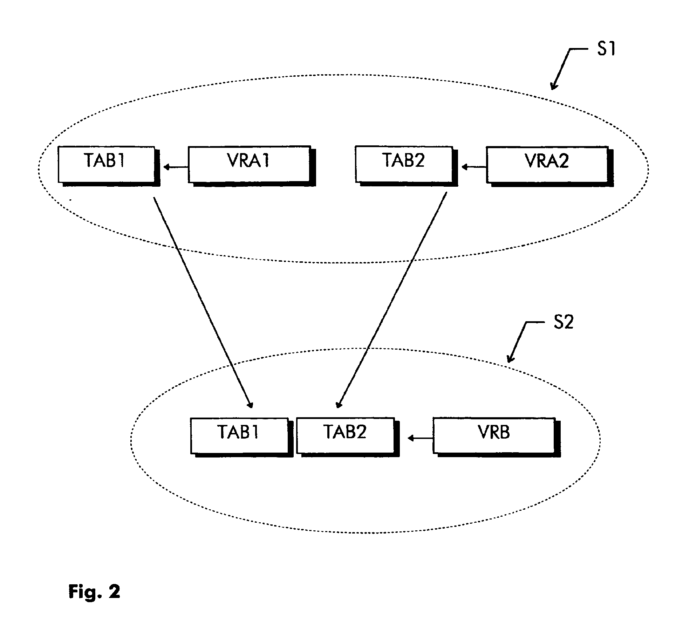

Anhand von Figur 2 wird im folgenden die Erfindung detaillierter dargestellt und ein weiterer Aspekt der Erfindung verdeutlicht, der durch das erfindungsgemäße, dynamische Einbinden von Validierungsregeln jeweils zu einem bestimmten Validierungsvorgang ermöglicht wird. In Figur 2 sind die aus Figur 1 bekannten, zu validierenden Konfigurationsdaten KD in zwei Teilmengen TAB1 und TAB2 aufgeteilt, z.B. in zwei Datentabellen, die auch in Figur 2 durch das aus Figur 1 bekannte Validierungsmodul VM validiert werden. Das Validierungsmodul VM ermittelt zunächst in der oben dargestellten Weise, welcher Validierungsregelsätze VR1 und VR2 zur Validierung der Konfigurationsdaten KD verwendet werden muß. Dann führt das Validierungsmodul VM die eigentliche Validierung anhand der in dem ermittelten Validierungsregelsatz enthaltenen Validierungsregeln durch. In Figur 2 sind diese Validierungsregeln in Form von Validierungsregeln VRA1, VRA2 und VRB dargestellt, die dem Beispiel aus Figur 1 folgend in dem Validierungsregelsatz VR2 enthalten sind.

Das Validierungsmodul VM prüft gemäß den Validierungsregeln VRA1, VRA2 und VRB die Konfigurationsdaten KD in einer Teilprüfung S1 und einer Teilprüfung S2, die in Figur 2 jeweils durch gestrichelte Linien angedeutet sind. Bei der Teilprüfung S1 werden die Teilmengen TAB1 und TAB2 von dem Validierungsmodul VM jeweils einzeln geprüft und zwar die Teilmenge TAB1 anhand der Validierungsregel VRA1 und die Teilmenge TAB2 anhand der Validierungsregel VRA2. Dabei kann z.B. überprüft werden, ob die Teilmenge TAB1 nur Datensätze mit jeweils einer sechsstelligen Rufnummer und einer ersten Kennung enthält und die Teilmenge TAB2 nur Datensätze, die jeweils aus einer Rufnummer und einer zweiten Kennung bestehen. Wenn die Teilmengen TAB1 und TAB2 jeweils der Teilprüfung S1 standgehalten haben, also in sich konsistent sind, prüft das Validierungsmodul VM in der Teilprüfung 52, ob die Teilmengen TAB1 und TAB2 wechselseitig konsistent sind. Dazu wendet das Validierungsmodul VM die Validierungsregel VRB an. In dieser wird z.B. vorgegeben, daß jede Rufnummer aus der Teilmenge TAB1 auch in mindestens einem Datensatz der Teilmenge TAB2 enthalten sein muß. Die Ergebnisse der Teilprüfungen S1 und S2 meldet das Validierungsmodul VM wie in Figur 1 mit Hilfe einer Meldenachricht MSG.

Wie im obigen Abschnitt beschrieben, kann das Validierungsmodul VM alle in einem Validierungsregelsatz enthaltene Validierungsregeln nacheinander und vollständig auf die Konfigurationsdaten KD anwenden. Es ist jedoch auch möglich, daß dem Validierungsmodul VM mit Hilfe von Steuerdaten vorgegeben wird, nur eine Teilvalidierung der Konfigurationsdaten KD durchzuführen, also nur einen Teil der Validierungsregeln eines Validierungsregelsatzes anzuwenden. So kann das Validierungsmodul VM z.B. angewiesen werden, nur die Teilprüfung S1 anhand der Validierungsregeln VRA1 und VR2 vorzunehmen. Das Validierungsmodul VM kann auf diese Weise sehr effizient arbeiten, da es nur die zur Validierung tatsächlich erforderlichen Validierungsregeln einlesen und auswerten muß.

Zur Darstellung einer weiteren Variante der Erfindung sei angenommen, daß die Validierungsregeln VRA1 und VRA2 in einem ersten Validierungsregelsatz, z.B. dem Validierungsregelsatz VR1, enthalten sind und die Validierungsregel VRB in einem zweiten Validierungsregelsatz, z.B. dem Validierungsregelsatz VR2. Wenn das Validierungsmodul VM dazu angewiesen wird, nur die Teilprüfung S1 durchzuführen, ermittelt das Validierungsmodul VM, daß dazu nur der Validierungsregelsatz VR1 erforderlich ist, liest dann auch nur den Validierungsregelsatz VR1 ein und prüft nach dessen Validierungsregeln. Nur wenn beide Teilprüfungen S1 und S2 verlangt sind, zieht das Validierungsmodul VM sowohl den Validierungsregelsatz VR1 als auch den Validierungsregelsatz VR2 zu der gewünschten Validierung der Konfigurationsdaten KD heran.

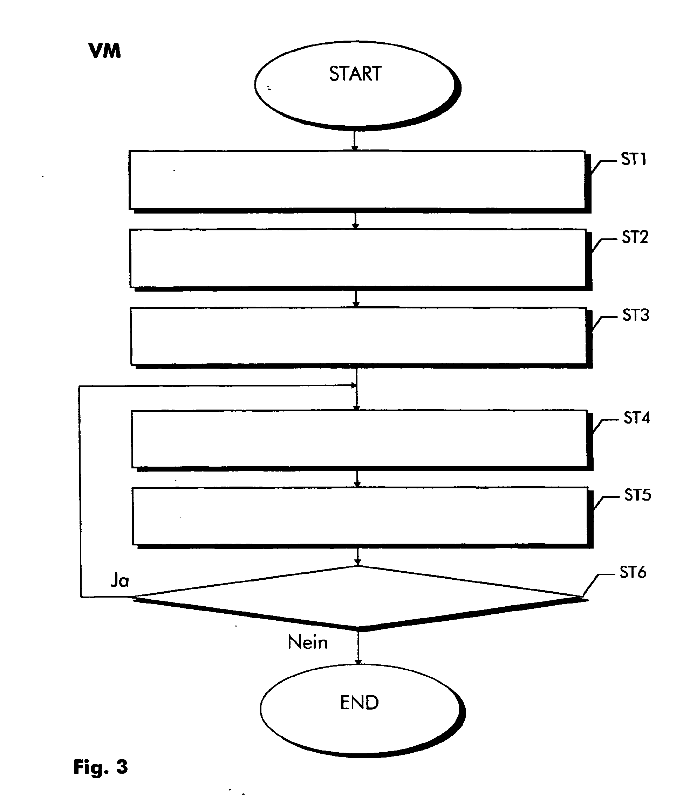

In Figur 3 ist das Validierungsmodul VM in seinen wesentlichen Funktionsschritten dargestellt. Das Validierungsmodul VM besteht, wie schon erwähnt, aus in einem Speicher gespeicherten und von einem Steuermittel, z.B. von einem Prozessor, lesbaren und unmittelbar ausführbaren oder mit Hilfe eines Interpreter-Programmodules indirekt auswertbaren Befehlssequenzen. Im Interesse einer leicht verständlichen Darstellung ist das Validierungsmodul VM in Figur 3 in Form eines Ablaufdiagrammes dargestellt, in dessen Ablauf einzelne Schritte ausgeführt werden. Die einzelnen Schritte stehen jeweils für einen einzelnen Befehl oder eine Folge von Befehlen, die jeweils eine funktionale Einheit, eine sogenannte Funktion, bilden. Die Anzahl der Schritte in Figur 3 sowie deren Ablauf ist als beispielhaft für eine praxisgerechte Lösung anzusehen. Ausgehend von einem Startfeld START erfaßt das Validierungsmodul VM in einem Schritt ST1 Konfigurationsdaten, die z.B. über die Schnittstellenvorrichtung IF oder das Tastenfeld KEY an das Validierungsmodul VM gesendet werden. Die Anweisungen des Schrittes ST1 sind in einer Empfangsfunktionseinheit, z.B. in einem Unterprogramm, zusammengefaßt. In einem Schritt ST2 ermittelt das Validierungsmodul VM, welcher Validierungsregelsatz zu der Validierung der erfaßten Konfigurationsdaten KD erforderlich ist. In einem Schritt ST3 liest das Validierungsmodul VM den ermittelten Validierungsregelsatz ein und wertet anschließend die erste darin enthaltene Validierungsregel in einem Schritt ST4 aus. In einem Schritt ST5 prüft das Validierungsmodul VM die Konfigurationsdaten nach den Vorschriften der in Schritt ST4 ausgewerteten Validierungsregel. In einem Schritt ST6 wird überprüft, ob das Validierungsmodul VM nach Erfüllung des Schrittes ST5 weitere Validierungsregeln auswerten soll. Ist dies der Fall, verzweigt das Validierungsmodul VM wieder zu dem Schritt ST4. Ansonsten endet das Validierungsmodul VM in einem Schritt END.

## Patentansprüche

1. Verfahren zur Validierung von Konfigurationsdaten (KD) als Betriebsparameter von Telekommunikationssystemen anhand von Validierungsregeln durch ein Validierungsmodul (VM), mit den Schritten:
- Erfassen der Konfigurationsdaten,
- Ermitteln eines Validierungsregelsatzes (VR2) mit mindestens einer Validierungsregel zur Validierung der Konfigurationsdaten,
- Auswerten des Validierungsregelsatzes,
- Prüfen der Konfigurationsdaten gemäß den Vorschriften des Validierungsregelsatzes und
- Ausgeben einer Meldenachricht (MSG) mit einer Information über den Erfolg der Prüfung,
**dadurch gekennzeichnet, daß** das Ermitteln eines Validierungsregelsatzes die Auswahl eines Validierungsregelsatzes aus einer Mehrzahl von mindestens zwei Validierungsregelsätzen (VR1, VR2) umfaßt, daß der ermittelte und ausgewählte Validierungsregelsatz eingelesen wird, und daß die Zuordnung von Konfigurationsdaten zu einem Validierungsregelsatz durch die Verwendung von Steuerdaten (VCONF) erfolgt.

2. Verfahren nach Anspruch 1, **dadurch gekennzeichnet, daß** das Validierungsmodul (VM) den Validierungsregelsatz (VR2) aus für das Validierungsmodul bestimmten Steuerdaten (VCONF) ermittelt.

3. Verfahren nach Anspruch 1, **dadurch gekennzeichnet, daß** der Validierungsregelsatz (VR) mit Hilfe eines in den Konfigurationsdaten (KD) enthaltenen Kennzeichners (ID1) ermittelt wird.

4. Verfahren nach Anspruch 1, **dadurch gekennzeichnet, daß** bei dem Auswerten des Validierungsregelsatzes (VR2) Funktionsblöcke ermittelt und eingelesen werden, mit denen die Konfigurationsdaten (KD) entsprechend den in dem Validierungsregelsatz enthaltenen Validierungsregeln geprüft werden können, und daß zu der Prüfung der Konfigurationsdaten die Funktionsblöcke eingesetzt werden.

5. Verfahren nach Anspruch 1, **dadurch gekennzeichnet, daß** bei dem Auswerten des Validierungsregelsatzes (VR2) aus den in dem Validierungsregelsatzes enthaltenen Validierungsregeln Funktionsblöcke erzeugt werden, mit denen die Konfigurationsdaten (KD) entsprechend den in dem Validierungsregelsatz enthaltenen Validierungsregeln geprüft werden können, und daß zu der Prüfung der Konfigurationsdaten die Funktionsblöcke eingesetzt werden.

6. Verfahren nach Anspruch 1, **dadurch gekennzeichnet, daß** bei der Ausgabe der Meldenachricht (MSG) mit einer Information über den Erfolg der Prüfung Vorgabeinformationen verwendet werden, die in dem Validierungsregelsatz enthalten sind.

7. Validierungsmodul (VM) zur Validierung von Konfigurationsdaten (KD) als Betriebsparameter von Telekommunikationssystemen anhand von Validierungsregeln, wobei das Validierungsmodul eine Empfangsfunktionseinheit aufweist, die so ausgestaltet ist, daß das Validierungsmodul die Konfigurationsdaten erfassen kann, wobei das Validierungsmodul eine Auswertefunktionseinheit aufweist, die so ausgestaltet ist, daß das Validierungsmodul den Validierungsregelsatz auswerten kann, wobei das Validierungsmodul eine Prüffunktionseinheit aufweist, die so ausgestaltet ist, daß das Validierungsmodul die Konfigurationsdaten gemäß den Vorschriften des Validierungsregelsatzes prüfen kann, und wobei das Validierungsmodul eine Ausgabefunktionseinheit aufweist, die so ausgestaltet ist, daß das Validierungsmodul eine Meldenachricht mit einer Information über den Erfolg der Prüfung ausgeben kann **dadurch gekennzeichnet, daß** das Validierungsmodul eine Ermittlungsfunktionseinheit aufweist, die so ausgestaltet ist, daß das Validierungsmodul einen Validierungsregelsatz mit mindestens einer Validierungsregel zur Validierung der Konfigurationsdaten ermitteln kann, wobei das Ermitteln eines Validierungsregelsatzes die Auswahl eines Validierungsregelsatzes aus einer Mehrzahl von mindestens zwei Validierungsregelsätzen (VR1, VR2) umfaßt und wobei die Zuordnung von Konfigurationsdaten zu einem Validierungsregelsatz durch die Verwendung von Steuerdaten (VCONF) erfolgt, und daß das Validierungsmodul eine Einlesefunktionseinheit aufweist, die so ausgestaltet ist, daß das Validierungsmodul den Validierungsregelsatz einlesen kann.

8. Server (SER) zur Validierung von Konfigurationsdaten (KD) als Betriebsparameter von Telekommunikationssystemen anhand von Validierungsregeln, wobei der Server Empfangsmittel (IF, KEY) aufweist, die so ausgestaltet sind, daß der Server die Konfigurationsdaten erfassen kann, wobei der Server Auswertemittel aufweist, die so ausgestaltet sind, daß der Server den Validierungsregelsatz auswerten kann, wobei der Server Prüfmittel aufweist, die so ausgestaltet sind, daß der Server die Konfigurationsdaten gemäß den Vorschriften des Validierungsregelsatzes prüfen kann, und wobei der Server Ausgabemittel (DIS) aufweist, die so ausgestaltet sind, daß der Server eine Meldenachricht mit einer Information über den Erfolg der Prüfung ausgeben kann, **dadurch gekennzeichnet, daß** der Server Ermittlungsmittel aufweist, die so ausgestaltet sind, daß der Server einen Validierungsregelsatz mit mindestens einer Validierungsregel zur Validierung der Konfigurationsdaten ermitteln kann, wobei das Ermitteln eines Validierungsregelsatzes die Auswahl eines Validierungsregelsatzes aus einer Mehrzahl von mindestens zwei Validierungsregelsätzen (VR1, VR2) umfaßt und wobei die Zuordnung von Konfigurationsdaten zu einem Validierungsregelsatz durch die Verwendung von Steuerdaten (VCONF) erfolgt, und daß der Server Einlesemittel aufweist, die so ausgestaltet sind, daß der Server den Validierungsregelsatz einlesen kann.

9. Steuermodul, auf dem ein Validierungsmodul abgespeichert ist und das dazu vorgesehen ist, im Zusammenhang mit einem Prozessor das Verfahren nach Anspruch 1 auszuführen.

10. Speichermittel, **dadurch gekennzeichnet, daß** darauf ein Validierungsmodul (VM) nach Anspruch 7 gespeichert ist.

## Claims

1. A method for the validation of configuration data (KD) as operating parameters of telecommunications systems with the help of validation rules through a validation module (VM), with the following steps:
- detection of the configuration data,
- determination of a validation rule set (VR2) with at least one validation rule for the validation of the configuration data,
- evaluation of the validation rule set,
- checking of the configuration data in accordance with the instructions of the validation rule set and
- outputting of a signalling message (MSG) with information about the success of the check,
**characterized in that** the determination of a validation rule set comprises the selection of a validation rule set from a plurality of at least two validation rule sets (VR1, VR2), that the determined and selected validation rule set is read in, and that the allocation of configuration data to a validation rule set takes place by the use of control data (VCONF).

2. The method according to Claim 1, **characterized in that** the validation module (VM) determines the validation rule set (VR2) from the control data (VCONF) specified for the validation module.

3. The method according to Claim 1, **characterized in that** the validation rule set (VR) is determined with the help of an identifier (ID1) contained in the configuration data (KD).

4. The method according to Claim 1, **characterized in that** in the case of the evaluation of the validation rule set (VR2) function blocks are determined and read in, with which the configuration data (KD) can be checked in correspondence with the validation rules contained in the validation rule set, and that the function blocks are employed for the checking of the configuration data.

5. The method according to Claim 1, **characterized in that** in the case of the evaluation of the validation rule set (VR2) function blocks are generated from the validation rules contained in the validation rule set with which the configuration data (KD) can be checked in correspondence with the validation rules contained in the validation rule set, and that the function blocks are employed for the checking of the configuration data.

6. The method according to Claim 1, **characterized in that** in the case of the outputting of the signalling message (MSG) with information about the success of the check default information is used which is contained in the validation rule set.

7. A validation module (VM) for the validation of configuration data (KD) as operating parameters of telecommunications systems with the help of validation rules, wherein the validation module exhibits a receive function unit which is designed in such a way that the validation module can detect the configuration data, wherein the validation module exhibits an evaluation function unit which is designed in such a way that the validation module can evaluate the validation rule set, wherein the validation module exhibits a check function unit which is designed in such a way that the validation module can check the configuration data in accordance with the Instructions of the validation rule set and wherein the validation module exhibits an output function unit which is designed in such a way that the validation module can output a signalling message with information about the success of the check, **characterized in that** the validation module exhibits a determination function unit which is designed in such a way that the validation module can determine a validation rule set with at least one validation rule for the validation of the configuration data, wherein the determination of a validation rule set comprises the selection of a validation rule set from a plurality of at least two validation rule sets (VR1, VR2) and wherein the allocation of configuration data to a validation rule set takes place through the use of control data (VCONF), and that the validation module exhibits a read in function unit which is designed in such a way that the validation module can read in the validation rule set.

8. A server (SER) for the validation of configuration data (KD) as operating parameters of telecommunications systems with the help of validation rules, wherein the server exhibits reception means (IF, KEY) which are designed in such a way that the server can detect the configuration data, wherein the server exhibits evaluation means which are designed in such a way that the server can evaluate the validation rule set, wherein the server exhibits checking means which are designed in such a way that the server can check the configuration data In accordance with the instructions of the validation rule set, and wherein the server exhibits outputting means (DIS) which are designed in such a way that the server can output a signalling message with information about the success of the check,
**characterized in that** the server exhibits determination means which are designed in such a way that the server can determine a validation rule set with at least one validation rule for the validation of the configuration data, wherein the determining of a validation rule set comprises the selection of a validation rule set from a plurality of validation rule sets (VR1, VR2) and wherein the allocation of configuration data to a validation rule set takes place through the use of control data (VCONF), and that the server exhibits read in means which are designed in such a way that the server can read in the validation rule set.

9. A control module at which a validation module is stored and which is provided for the purpose of executing in conjunction with a processor the method according to Claim 1.

10. Storing means, **characterized in that** a validation module (VM) according to Claim 7 is stored there.

## Revendications

1. Procédé destiné à la validation de données de configuration (KD) en tant que paramètres de fonctionnement de systèmes de télécommunication au moyen de règles de validation par l'intermédiaire d'un module de validation (VM), ledit procédé comportant les étapes suivantes :
- détection des données de configuration,
- détermination d'un ensemble de règles de validation (VR2) comportant au moins une règle de validation destinée à la validation des données de configuration,
- évaluation de l'ensemble de règles de validation,
- contrôle des données de configuration conformément aux spécifications de l'ensemble de règles de validation et
- émission d'un message de signalisation (MSG) comportant une information relative au succès du contrôle,
**caractérisé en ce que** la détermination d'un ensemble de règles de validation comprend le choix d'un ensemble de règles de validation parmi une pluralité d'au moins deux ensembles de règles de validation (VR1, VR2), l'ensemble de règles de validation déterminé et choisi est lu, et l'association de données de configuration à un ensemble de règles de validation a lieu par l'utilisation de données de commande (VCONF).

2. Procédé selon la revendication 1, **caractérisé en ce que** le module de validation (VM) détermine l'ensemble de règles de validation (VR2) à partir des données de commande (VCONF) déterminées pour le module de validation (VM).

3. Procédé selon la revendication 1, **caractérisé en ce que** l'ensemble de règles de validation (RV) est déterminé à l'aide d'un identificateur (ID1) contenu dans les données de configuration (KD).

4. Procédé selon la revendication 1, **caractérisé en ce que,** lors de l'évaluation de l'ensemble de règles de validation (VR2), des blocs fonctionnels, avec lesquels les données de configuration (KD) peuvent être contrôlées conformément aux règles de validation contenues dans l'ensemble de règles de validation, sont déterminés et lus, et les blocs fonctionnels sont utilisés pour le contrôle des données de configuration.

5. Procédé selon la revendication 1, **caractérisé en ce que**, lors de l'évaluation de l'ensemble de règles de validation (VR2) à partir des règles de validation contenues dans l'ensemble de règles de validation, des blocs fonctionnels, avec lesquels les données de configuration (KD) peuvent être contrôlées conformément aux règles de validation contenues dans l'ensemble de règles de validation, sont produits, et les blocs fonctionnels sont utilisés pour le contrôle des données de configuration.

6. Procédé selon la revendication 1, **caractérisé en ce que**, lors de l'émission du message de signalisation (MSG) comportant une information relative au succès du contrôle, des informations prédéterminées qui sont contenues dans l'ensemble de règles de validation sont utilisées.

7. Module de validation (VM) destiné à la validation de données de configuration (KD) en tant que paramètres de fonctionnement de systèmes de télécommunication au moyen de règles de validation, le module de validation présentant une unité fonctionnelle de réception qui est formée de sorte que le module de validation puisse détecter les données de configuration, le module de validation présentant une unité fonctionnelle d'évaluation qui est formée de sorte que le module de validation puisse évaluer l'ensemble de règles de validation, le module de validation présentant une unité fonctionnelle de contrôle qui est formée de sorte que le module de validation puisse contrôler les données de configuration conformément aux spécifications de l'ensemble de règles de validation, et le module de validation présentant une unité fonctionnelle d'émission qui est formée de sorte que le module de validation puisse émettre un message de signalisation comportant une information relative au succès du contrôle, **caractérisé en ce que** le module de validation présente une unité fonctionnelle d'émission qui est formée de sorte que le module de validation puisse déterminer un ensemble de règles de validation comportant au moins une règle de validation destinée à la validation des données de configuration, la détermination d'un ensemble de règles de validation comprenant le choix d'un ensemble de règles de validation parmi une pluralité d'au moins deux ensembles de règles de validation (VR1, VR2) et l'association de données de configuration à un ensemble de règles de validation ayant lieu par l'utilisation de données de commande (VCONF), et le module de validation présentant une unité fonctionnelle de lecture qui est formée de sorte que le module de validation puisse lire l'ensemble de règles de validation.

8. Serveur (SER) destiné à la validation de données de configuration (KD) en tant que paramètres de fonctionnement de systèmes de télécommunication au moyen de règles de validation, le serveur présentant des moyens de réception (IF, KEY) qui sont formés de sorte que le serveur puisse détecter les données de configuration, le serveur présentant des moyens d'évaluation qui sont formés de sorte que le serveur puisse évaluer l'ensemble de règles de validation, le serveur présentant des moyens de contrôle qui sont formés de sorte que le serveur puisse contrôler les données de configuration conformément aux spécifications de l'ensemble de règles de validation, et le serveur présentant des moyens d'émission (DIS) qui sont formés de sorte que le serveur puisse émettre un message de signalisation comportant une information relative au succès du contrôle, **caractérisé en ce que** le serveur présente des moyens de détermination qui sont formés de sorte que le serveur puisse déterminer un ensemble de règles de validation comportant au moins une règle de validation concernant la validation de données de configuration, la détermination d'un ensemble de règles de validation comprenant le choix d'un ensemble de règles de validation parmi une pluralité d'au moins deux ensemble de règles de validation (VR1, VR2) et l'association de données de configuration à un ensemble de règles de validation ayant lieu par l'utilisation de données de commande (VCONF), et le serveur présentant des moyens de lecture qui sont formés de sorte que le serveur puisse lire l'ensemble de règles de validation.

9. Module de commande, sur lequel est stocké un module de validation et qui est prévu pour exécuter, en relation avec un processeur, le procédé selon la revendication 1.

10. Moyen de mémorisation, **caractérisé en ce que** sur celui-ci est stocké un module de validation (VM) selon la revendication 7.
